# EUROPEAN PATENT APPLICATION

(11) **EP 2 466 852 A1**
(43) Date of publication of application: **20.06.2012**
(21) Application number: 10195550.8
(22) Date of filing: 17.12.2010
(51) Int. Cl.: H04L 29/08

(54) **Digital content management**

(71) Applicant: Swisscom AG, 3050 Bern (CH)
(72) Inventor: The designation of the inventor has not yet been filed
(74) Representative: BOVARD AG

(57) **Abstract**

The present invention relates to a method for a first communication device to share content with at least a second communication device in a communication network. The method comprises the following steps performed by a network module: (a) receiving (311) a first type of classification information related to a content emanating from the first communication device, the first type of classification information classifying the content; (b) determining (315) where the classified content emanating from the first communication device is located; (c) determining (317) whether the classification of the content corresponds to a second type of classification linked with a second communication device; and (d) in the case where the classification of the content corresponds to the second type of classification, then making (323, 325) the content available to the second communication device.

## Description

### TECHNICAL FIELD

The present invention relates to a new method of content management in a communication network. One specific embodiment of the present invention relates to sharing images in a communication network. The invention likewise relates to corresponding communication network elements, to a communication system and to a computer program product arranged to implement the method.

### BACKGROUND OF THE INVENTION

Widely available methods of content management offer a server in the internet on which this content can be stored and managed. This content can for instance be digital images, videos or other electronic files. Many current models of photo sharing use online photo sharing websites. To share photos on these websites, the user uploads copies of their photos to the hosting server, and their friends and family can view them by downloading them to their own computer or by viewing them directly on the server.

The current models of photo sharing are undesirable for several reasons. One of the issues is related to access control. In many systems, users need to have correct access credentials, such as a user account number or name and a secret password, in order to access the content. The management of different access credentials complicates of course the use of the service. One of the drawbacks of the current solutions is how the information is spread over the different open systems interconnection (OSI) layers. This information, which can be a user profile (personal information, service registered, etc.) or a more technical parameter, such as an IP address or a serial number of the user's router, are never centralised. As a result, the user has complicated administration steps to pass to enjoy any new services.

The management of different access credentials is somewhat facilitated by a method called single sign-on that allows a user to access different types of services or web applications with the same credentials. However, the management of access credentials is not completely avoided even with the single sign-on (SSO) method. A user who wants to share his personal content like a picture album with his family does not want to manage a data bank of passwords to protect his content. Such a user is keen on having a solution without any bother.

Another issue related to photo sites that allow sharing of photos in the internet is that photos are normally thought of as being extremely personal items. People are often hesitant to load their personal pictures up to a large server database, accessible to everybody, if no access credentials are used.

Peer-to-Peer (P2P) is another solution for sharing content. The users can keep their content on their own computer, where they already are. Server storage limitations and problems related to updating multiple copies in different stores are resolved. The obvious problem with the P2P approach is that the two peers might not have their machines on at the same time.

Thus, there is a need for a solution for improving content management in communication networks.

### SUMMARY OF THE INVENTION

According to a first aspect of the invention, a method is provided for a first communication device to share content with at least a second communication device in a communication network as recited in claim 1.

Thus, the present invention proposes a new method to grant access to a shared content in a secure way and with minimal effort from the user. The present invention provides in a complex environment tools which help the end user to handle easily his content, e.g. pictures. The method is not device dependent, i.e. the content can be made available to any types of screens. The content can be for instance digital pictures, in which case the first device can pull the content from a picture application. No intelligent mechanism is in the picture application; it only needs to support content classification. The picture application classifies the picture with the right status, for instance family or friends.

Furthermore, the proposed method brings automatically a centralised content management. It makes it possible to a share user's personal content in a private environment without additional credentials.

Content proprieties, such as the metadata of a picture, can contain the classification information.

The method can be run in real-time or very close to real-time, in which case the second communication device is informed in real time about a new digital content.

The content can be stored on a server in the network and the content, once it becomes available on the first communication device, can be automatically uploaded to this server.

The proposed method can also be used for self organisation of pictures on a computer or on a television. The self organisation means that the right content is available to the right person. The basic idea here is to use an authentication mechanism to identify the internet protocol TV (IPTV) user and to make available only the content which is tagged for this person. For instance, the access is granted if this person is a member of a family X and the TV is tagged family X. The IPTV is connected to the content of family X. There can be a camera on the IPTV to authenticate the mother X of the family X and only the family content is displayed, not other private content.

It also allows self optimisation for a picture slideshow on a computer or television. For instance, a picture shot with a high definition device will be displayed in high definition if the TV is of high definition. Otherwise the picture will be resized to a normal format. In the same way we can optimise a slideshow on a digital picture frame.

The user of the first communication device and/or the second communication device may also be authenticated. This improves the picture experience for the end user. For instance, the IPTV can have a mechanism to authenticate the user automatically. No user interaction is needed. A zero click experience is offered.

Self provisioning is one of the main advantages offered by the present invention. The invention allows linking of content to a person and to a device. Here the self provisioning means that a person can use a device to obtain his picture without setting any parameters or transfer manually his picture. The provisioning mechanism takes care of this task.

According to a second aspect of the invention, a computer program product is provided for implementing the steps of the method according to the first aspect of the present invention when loaded and run on computer means of the network element.

According to a third aspect of the invention, a communication network element is proposed as recited in claim 14.

According to a fourth aspect of the invention, a communication device is proposed as recited in claim 15.

Other aspects of the invention are recited in the dependent claims attached hereto.

### BRIEF DESCRIPTION OF THE DRAWINGS

Other features and advantages of the invention will become apparent from the following description of a non-limiting exemplary embodiment, with reference to the appended drawings, in which:
- Figure 1 is a simplified network block diagram of a communication network where the teachings of the present invention can be applied in accordance with the described embodiment of the present invention;
- Figure 2 illustrates how content can be shared between different devices in accordance with the described embodiment of the present invention;
- Figures 3a and 3b illustrate a flow chart describing the content sharing method in accordance with the described embodiment of the present invention; and
- Figures 4a and 4b illustrate a flow chart describing the content sharing method in accordance with another example of the present invention.

### DETAILED DESCRIPTION OF AN EMBODIMENT OF THE INVENTION

An embodiment of the present invention will be described in the following in more detail with reference to the attached figures. The content to be shared can for instance be digital images, but it is to be noted that the teachings of the present invention are not limited to only image sharing, but are applicable to other digital files too, such as video files.

The goal of this invention is to simplify content sharing and to provide a simple content sharing method for non-expert users even in situations where a single user possesses several content compatible devices. For allowing content sharing, different parameters needed are collected from the end user device to ensure an outstanding content sharing experience. These parameters are for instance the device user/owner or the device category (family device, private device). These parameters are then compared to the content tagging and the address book group in order to provision the device correctly as explained later in more detail. For instance a TV device tagged as family device will get access to all pictures tagged family. An address book may have a list of members or special group which defines who are the members of the family. Therefore, a member of the family who switches on his TV will be authenticated and an access will be granted to all the pictures tagged family.

Other parameters can be purely technical parameters, such as information on supporting high definition (HD) format, WiFi capability, etc. The sharing experience is a zero click experience when the user switches from one device to another. For instance, the present invention makes it possible for a user to take some pictures with his mobile phone camera and to watch them directly on his internet-connected television.

This picture experience is defined by all the different actions an end user has to take in order to share his photos or to receive photos from other users. Typical user actions are capturing, storing, editing and watching a picture.

In accordance with the present invention, the intelligence on the appropriate OSI layers is distributed and a new network module is introduced. In the following description this module is referred to as an administration module and it is arranged to store the different credentials and technical parameters mandatory to manage the functions and tasks accomplished on the different layers defined by the OSI model. For instance, the authentication for current TV service is bound to access for quality of service and bandwidth priority and not bound to TV application. It means, for instance, that the media access control (MAC) and internet protocol (IP) addresses are associated with additional information (e.g. maximum bandwidth available, bit error rate (BER), channel impulse response) about the quality of a signal transmitted from a server (IP TV signal). Furthermore, there are other credentials like serial number of the IP TV set top box and its related password or username and password of the user on the TV application level.

The focus of the present invention is primarily directed to devices with an internet access and which can produce, display and/or manage digital data, such as pictures including different image formats, like JPEG. One of the technical problems that the present invention solves is the transfer of the different credentials or parameters needed by different layers without asking the application layer, which interacts directly with the end user. As mentioned above the administrative module is arranged to store credentials, such as username and password of the end user, classification of the device category (family, private, friend), classification of user contacts (family, private, friend), technical parameters, e.g. BER, carrier-to-interference ratio (CIR), MAC and IP addresses.

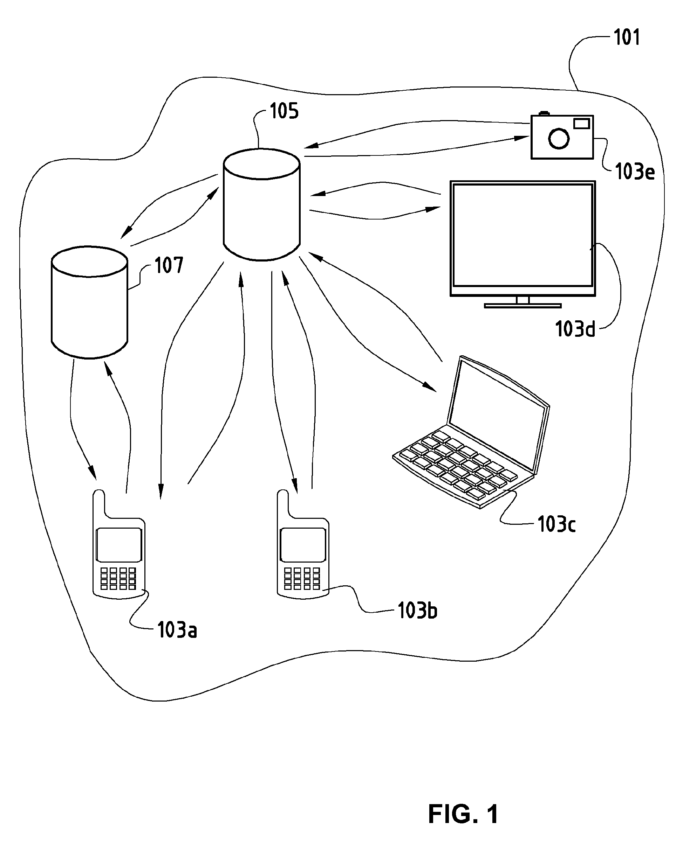

Figure 1 illustrates a simplified block diagram of a communication network 101 showing only the elements necessary for understanding the present invention. In this example, the communication network supports internet protocol (IP), so that communication between different network elements can be based on this protocol. There are also illustrated five end user devices, namely two mobile phones 103a, 103b, one laptop computer 103c, one television 103d and one WiFi connected digital single-lens reflex camera 103e. All these devices 103 are arranged to communicate with an administration module 105.

There is also shown a content storage server 107 that is arranged to store the content emanating from the communication devices 103. Only the devices 103 that want to share their content with other devices 103 need to be able to access this server 107. The administration module 105 can be an independent network element in the communication network, or it can be physically part of another element and thus it can be simply implemented by software. The storage server 107 and the administration module 105 could also be a single physical unit.

In accordance with one aspect of the present invention, different devices 103 can be tagged or classified. Different classifications are available, such as private, friends or family. Several sub-classifications are also available, such as friends_{A}, friends_{B} and so forth. One device 103 can belong to several classes at the same time. The device classification is done by the user of the device 103, and it is possible to change the already given classifications.

Once the devices 103 are tagged, the administration module 105 can access the device classification and store this information on the administration module 105. The administration module 105 can for instance at regular intervals interrogate the device classification from the devices 103. Alternatively this information is sent once from the devices 103 to the module 105 and only if the classification changes, devices 103 send this information again to the module 105.

The content to be shared is also tagged or classified by using the same classifications as for the devices 103. This classification is also done by the users of the devices 103. In some variants the content classification is done automatically without user intervention. For instance, if the content to be shared is photos, the photos can be automatically tagged based on the content of the photo. This can be done based on a face recognition mechanism. The idea can be taken further by tying this automated content tagging mechanism to the address book of the end user. For instance, a picture is automatically tagged "family". The administrative module 105 will check the family members within the address book of the user, and make this content automatically available for these members of this family on family tagged devices.

The content is stored on the server 107 and the administration module 105 is arranged to communicate with the server 107 to fetch the relevant content. Content classified as private is not fetched. The administration module 105 then automatically and securely distributes the fetched content to devices 103 that have the same classification as the content that was fetched. This content distribution may be subject to a confirmation received from these devices 103 that they want to receive the content. The administration module 105 stores for example the following information: personal information (e.g. full name and postal address), subscribed services (e.g. Swisscom email, Swisscom TV, mobile phone postpaid subscription, mobile data subscription) and device identities and/or types (e.g. mobile phone type, IP router type or voice over IP phone type) used by the customer.

The administration module 105 allows SSO functionality to simplify the use of the service for the customers. The administration module 105 also makes self provisioning possible for the customer devices 103. For instance, if the user has been registered for a long time to Swisscom Photo service and today subscribes to Swisscom TV. The administrative module 105 will get all the necessary information to make automatically the content available on Swisscom TV. This is self provisioning of Swisscom TV. Moreover, different services are used through the administration module 105.

The content uploading to the content storage location, i.e. to the server 107, is based on an automatic import channel. A combination of single sign-on and intelligent network interface selector allows uploading the content stored from an end user device 103 to the server 107 without asking the user to do any manipulation. The content is automatically transferred when the right network technology is available. Several issues can however affect the automatic upload of the content. The following things can affect the upload:
- Available network access technology;
- Battery level of the device 103;
- The source of energy of the device 103, e.g. battery or mains current;
- The amount of content, e.g. the number of pictures, queuing to be sent; and
- Content compression method.

For instance, the content is uploaded to the server 107 only when a desired network access technology is available or when the device battery level is sufficient or when the device 103 is connected to a main current. Furthermore, the upload can be initiated when certain amount of data are in the queue. Alternatively or in combination with the above aspects, the upload can be done at regular time intervals. For instance, the device 103 can at regular time intervals verify whether at least some of predefined conditions related to the above-identified issues are met. If at least some of the conditions are met, then the content can be uploaded to the server 107.

The present invention makes it possible, for example, to access your friends' shared picture albums from any screens. The administration module 105 sends an invitation to view a friend's picture album via a usual e-mail for example. This is done via the address book of the user which contains all the information about private contacts, family and friends groups. One of the particularities of the present invention makes it possible to access the shared content album not only from a PC web browser, but also from any other screens. A guest receives a notification on his mobile phone, IP TV and PC web browser or any additional connected screens like a digital picture frame device. The invitation information is broadcast in the IP network connecting the different devices 103. This approach allows a full integrated and seamless experience for the guest, and tends towards a zero click experience.

In accordance with the present invention, network parameters are used on the seven different OSI based layers. The administration module 105 knows which layer needs which parameters to actively provide this information without asking the upper layer and ending up with a complicated user interaction. The present invention uses the standard OSI model and standard protocols like IPv4 or hyper text transfer protocol secure (HTTPS). Some examples are illustrated below about the parameters and information which are used on the different layers to handle the content experience in a multi-screen environment.

**Table 1. Overview of the OSI model.**

| OSI model | | | |
|---|---|---|---|
| Host Layers | Data unit | Layer | Function |
| | Data | 7. Application | Network process to application |
| | | 6. Presentation | Data representation, encryption & decryption |
| | | 5. Session | Interhost communication |
| | Segments | 4. Transport | End-to-end connection and reliability |
| Media layers | Packet | 3. Network | Path determination and IP |
| | Frame | 2. Data link | Physical addressing |
| | Bit | 1. Physical | Media, signal and transmission |

In accordance with an embodiment of the present invention, the following features characterise the different OSI layers.

Physical layer: Fiber network brings about a real change in terms of user experience. For instance, fast upload during the day is possible. Software as a service makes, for example, the picture editing function possible.

Data link layer: Seamless transfer from one device to another is possible. A virtual interface allows transferring a picture stream session from one device to another without interruption.

Network layer: People and device profiles are bound to access profiles. A network operator shall be used to manage the service. For instance, the authentication for the current TV service is bound to the access for quality of service and bandwidth priority and not bound to a TV application. TV applications need usually a username and password to be used, but in the proposed solution the authentication request needs more information, e.g. what type of access the user has (integrated services digital network (ISDN), digital subscriber line (DLS), very high speed DLS (VDSL)) and what the quality of the signal is. If the quality of the signal is not good enough, no access to a TV application is possible. Or if the customer wants to have more bandwidth, a bandwidth priority mechanism will check the different criteria (describing the quality of the signal) to allow the user to get the requested bandwidth.

Transport layer: End-to-end connection function, such as re-send pictures or incremental picture uploads, ensures the reliability of the service and performance without annoying the user by asking to re-send pictures.

Session layer: Automatic sessions are managed to ensure a convenient data transfer across the distributed platform. Examples are automatic picture upload from a mobile phone to the internet or automatic web picture album creation for a TV.

Presentation layer: Icons, menu item lists, folder structures, pagination and views have the same design, and are consistent across the different platforms. Pictures are resized and optimised for different presentations such as TV and mobile phones.

Application layer: Different modes, like edit (picture, e-mail) or compose (e-mail, short messages) or view and preview guide the user and bring an intuitive cross-platform user experience.

Besides the functions which are designed on the seven OSI layers, the central administration module 105 is defined on the application layer. This module 105 collects the different information to reduce the user interaction and thus to move towards a zero click experience. The administration module's 105 particular function is to store personal information to ease the subscription to a new service. "Swisscom my Photo" application is one example. Swisscom Photo is a service which allows the user to store all his pictures from a mobile phone or DSLR camera in a centralised storage and access them from any web browser or Swisscom TV.

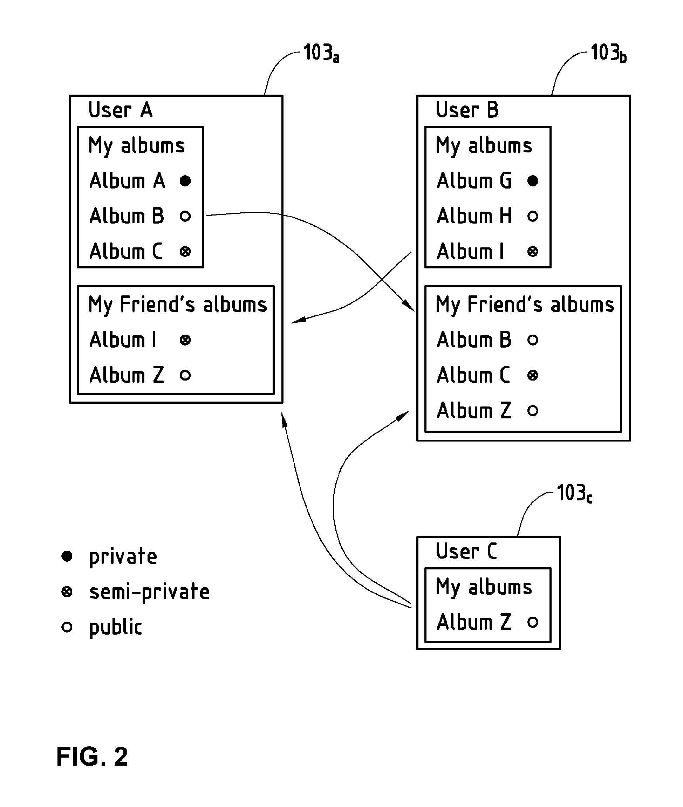

A trusted friends concept provided by the present invention requires the administration module 105 to store credentials of the users and make possible the interconnection between the members of the content sharing service. Figure 2 shows a typical example of image sharing between different user devices 103a, 103b and 103c.

The administration module 105 is arranged to manage and store different services and related parameters, such as mobile phone number, e-mail address, internet access type (dial-up, digital subscriber line, etc.) or IP TV service. The administration module 105 stores not only service information, but also device information.

A device 103 connected to a wireless or wired network of an internet service provider (ISP) is automatically identified by the administration module 105 and tied to a specific service. For instance, a mobile phone needs a subscriber identity module (SIM) card to authenticate the user and thus to offer a voice service. The authentication mechanism uses a so-called mobile subscriber integrated services digital network number (MSISDN) to check the identity of the user and grant access to the network. This MSISDN is stored in the administration module 105, and can be managed by the user or a customer centre.

The present invention allows the administration module 105 not only to manage the registered services and the devices 103 related to them, but also the content handled by these devices 103.

Next a concrete example is described in more detail. In this example the user devices 103 are tagged with three different tag types: private, family and friends. Once the service is activated and registered in the administration module 105, the administration module 105, or any other suitable network element within the ISP infrastructure, is able to find out the device classification for the device that is used to access the subscribed service. A separate process will ask the user if the device is "private", "family" or "friend". This is done by the administration module 105. The idea here is that the administration module 105 knows which content can be fetched by a specific device 103. For instance, in the Swisscom TV case a family member who switches on the Swisscom TV device, tagged or classified as a family device, will have access only to the family content. The administration module 105 will grant access to the right content. In a further extension of the idea the Swisscom TV has a face recognition mechanism to authenticate the user switching on the TV and only the user specific content is made available, in this case the family content and the friends' content. Friends' content can be managed in the address book which contains the information not only to share automatically the content to the listed friends, but also access the friends' content.

Each user can store personal content using the proposed service, for instance store personal data in the internet. This content is also tagged with exactly the same tag types: private, family and friends. The content is tagged by the users of the devices 103. This information is transmitted to the administration module 105 and thus this module is informed about the status of the personal content available on the connected devices 103.

Now the administration module 105 can broadcast the personal content to the different personal services (devices) according to the defined tags. For example, content from one device 103 tagged with family is transmitted to other devices with the very same family tag. Taking the example of Figure 2, the album C from device 103a is transmitted by the administration module 105 to the device 103b, which has the same tag as the album C. The main advantage is the availability of the personal content to the different devices 103 without any complicated user interaction.

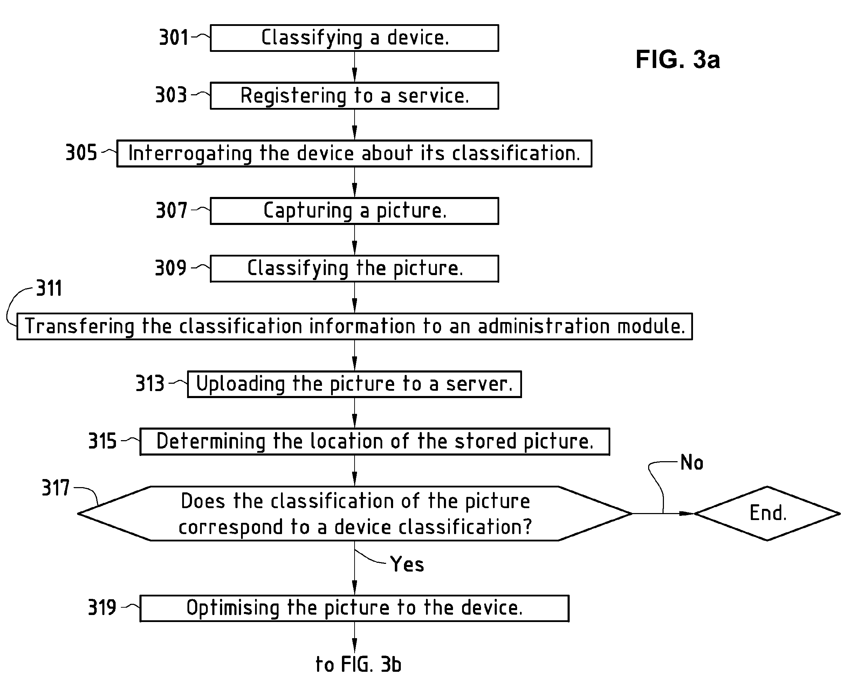

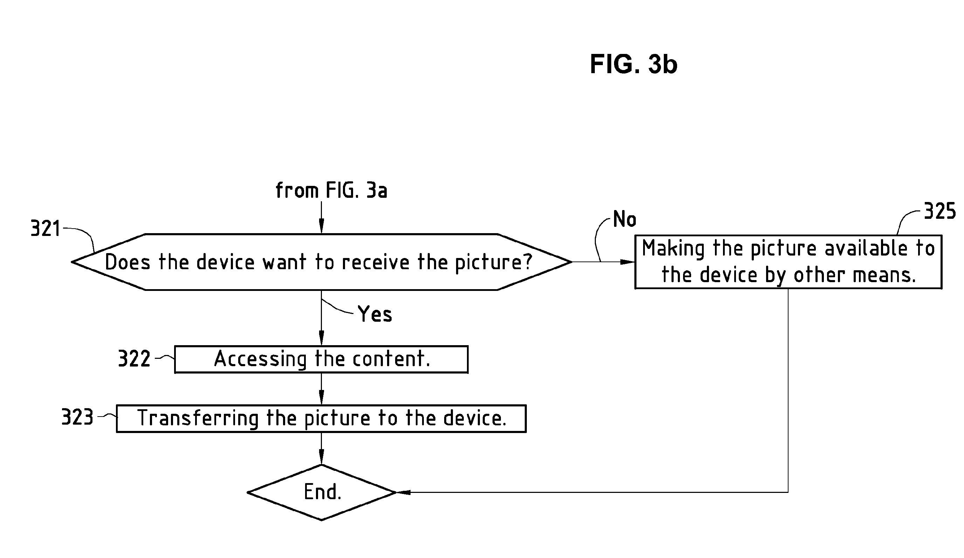

The above example is illustrated by the flow chart of Figures 3a and 3b with reference to Figure 1. In step 301 different devices are classified. Then in step 303 advantageously all these devices 103 register with the administration module 105. In this step these devices 103 can also be authenticated by the administration module 105 and/or the administration module 105 is informed about the device types of these devices 103. In step 305 the administration module 105 interrogates the devices about their classifications.

In step 307 the device 103a captures a picture by using its integrated camera. Next in step 309 the user of the device 103a classifies the picture. Once this is done, in step 311 this classification information can be transferred to the administration module 105. In step 313 the device 103a uploads the captured picture to the server 107 for storage. The administration module 105 is informed in step 315 about the location of the stored picture.

In step 317 it is determined whether the classification of the picture corresponds to the classification of the other registered devices 103b, 103c or 103d. If none of the device classifications matches the picture classification, then the process can be terminated. If, on the other hand, at least one of the other device classifications match the content classification, then in step 319 the picture can be optimised, for instance resized, to the devices with the same classification as the content.

In step 321 it is determined whether the devices actually want to receive the photos. If the response is in the affirmative, then in step 322 the administration module accesses the picture, and in step 323 the picture can be transferred to the devices that have the same classification as the content. If, on the other hand, in step 321 it was determined that the devices do not want to receive the picture, it can be made available to these devices by some other means, by for instance storing it on another server and giving access rights to these devices, so that these devices can access the picture at a later moment in time. After steps 323 and 325 the process comes to an end.

In another example, instead of or in addition to taking advantage of the device classification, another component can come into play, namely an address book. In accordance with the present invention, the address book can be connected to personal content. A user's address book has a group definition which manages the access to personal content. For example, a family group policy permits a family member who belongs to this group to access automatically the personal content tagged as family from any of his family devices. The address book application is bound to the administration module 105 which grants access to the different screens or devices. It uses a sharing mechanism each time the user is interested in distributing or viewing family or friends content on his own devices.

As in the example illustrated above, the address book contains also the same three tag types in contact details as device and content: private, family and friends. The personal address book is a registered service on the administration module 105. In this simplified example, a member of the family, for instance the father, has three contacts tagged family in his personal address book, James, Dhiren and Gavin. James wants to share his personal content with his family. Therefore, he tags his personal content with "family". The administration module 105 gets the information that James has "family" content and looks up who are the family members of James. This can be done either by looking at the address book of James or looking at the address books of other users. James is also registered for online photo service, and he is known by the administration module 105.

The search result is James's father because father's address book contains James, Dhiren and Gavin with the family tag, or alternatively James's address book shows that his father is tagged with family. In a further extension of this example, this look up mechanism also finds out that the father has two devices which are "family" tagged. Thus, the administration module 105 broadcasts James's personal content directly to the father's personal devices 103. Consequently the father received directly new content from his child James without any interaction thanks to the information and different look up and broadcast mechanisms contained in the administration module 105.

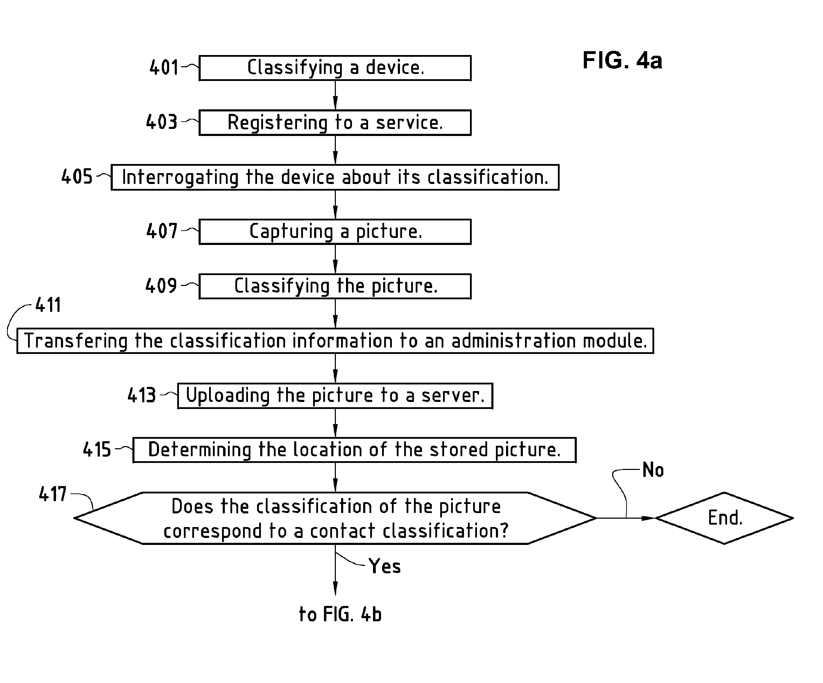

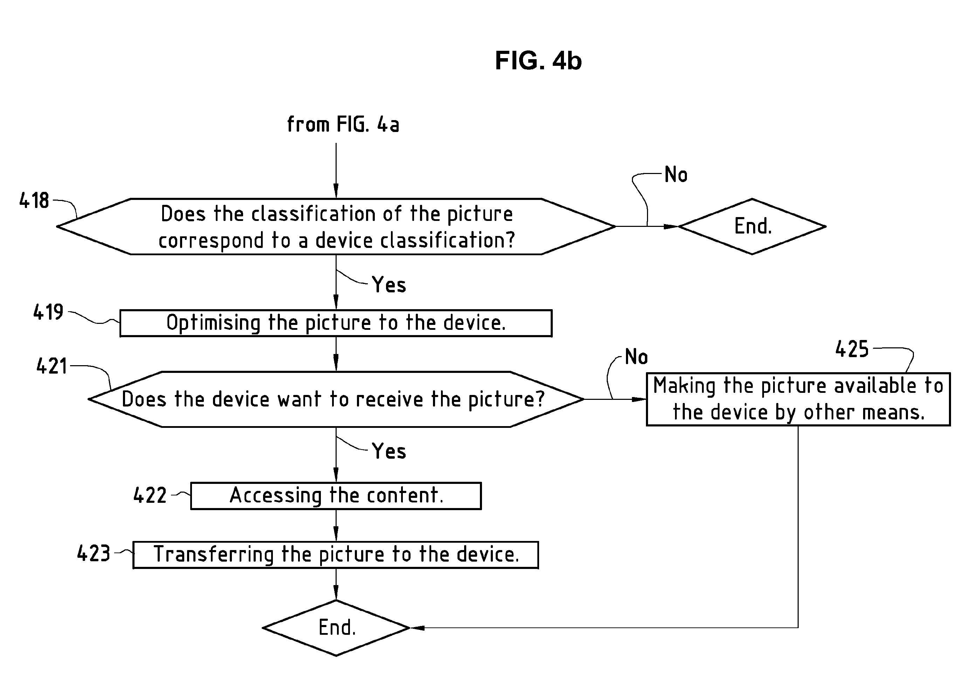

This example is illustrated by the flow chart of Figures 4a and 4b. It is almost identical to the flow chart of Figures 3a and 3b. Only the step 317 is replaced with steps 417 and 418. In other words, in accordance with the flow chart of Figure 4, a two-step classification step is done. First the content classification is compared with a contact classification of an address book and then the content classification is compared with a device classification. It is also possible to perform the step 418 first and then the step 417. Also in these two flow charts the order of some other steps could be changed.

An embodiment of the invention was described above. It is to be noted that the teachings of the invention are not limited to any specific network access technology. Also the teachings of the invention are applicable both in wireless (e.g. any generation cellular networks or wireless local area networks) and wired networks (e.g. universal serial bus (USB) or wired local networks).

The invention likewise relates to a computer program product comprising instructions for implementing the steps of the method described above, when loaded and run on computer means of the administration module 105 capable of implementing the method.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. In particular, the content emanating from the devices 103 can be stored on these very same devices 103, i.e. in that case there would be no need for the specific storage server 107.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. A method for a first communication device (1 03a) to share content with at least a second communication device (103b) in a communication network (101), the method comprising the following steps performed by a network module (105):
• receiving (311) first type of classification information related to a content emanating from the first communication device (103a), the first type of classification information classifying the content;
• determining (315) where the classified content emanating from the first communication device (1 03a) is located;
• determining (317) whether the classification of the content corresponds to a second type of classification linked with a second communication device (103b); and
• in the case where the classification of the content corresponds to the second type of classification, then making (323, 325) the content available to the second communication device (103b).

2. A method according to claim 1, wherein before making the content available, the network module (105) receives an indication from the first communication device (1 03a) that the content is available, and, in response to a confirmation from the second communication device (103b), accesses (322) the content and transmits (323) the content to the second communication device (103b).

3. A method according to claim 1 or 2, wherein the second type of classification is at least one of the following: a device classification, a contact classification of an address book and a user classification of the second communication device (103b).

4. A method according to any one of the preceding claims, wherein the classified content is made available to the second communication device (1 03b) only if the classification of the content also corresponds to a third type of classification related to the second communication device (1 03b) or to the user of the second communication device (103b).

5. A method according to claim 4, wherein the second type of classification is an address book classification or a user classification of the second communication device (103b), and the third type of classification is device classification.

6. A method according to claim 5, wherein the network module (105) determines at least one contact classification in the address book of the first communication device (1 03a) or at least one contact classification in the address book of the second communication device (1 03b), and then compares this contact classification to the content classification.

7. A method according to any one of the preceding claims, wherein the method further comprises receiving (303) service registration information from the first communication device (1 03a) and from the second communication device (103b).

8. A method according to claim 7, wherein the registration information indicates to the network module (105) where the content of the first communication device is stored and/or indicates to the network module (105) the type of registered device (103a, 103b).

9. A method according to claim 8, wherein the method further comprises the network module (105) resizing and/or optimising (319) the content to the second communication device (1 03b) based on the device type of the second communication device (1 03b).

10. A method according to any one of the preceding claims, wherein the classified content is stored on at least one of the following elements: the network element (105), another network element (107) and the first communication device (1 03a), the network elements being physically different elements.

11. A method according to any one of the preceding claims, wherein the method further comprises the network module (105) authenticating (303) the user of the first communication device (1 03a) and/or the second communication device (103b).

12. A method according to any one of the preceding claims, wherein the method further comprises the first communication device (1 03a) uploading (313) the content to its storage location and wherein the uploading is affected by at least one of the following: available network access technology, battery level of the first communication device (1 03a), the source of energy of the first communication device (1 03a), the amount of content to be uploaded and content compression method.

13. A computer program product comprising instructions for implementing the steps of a method according to any one of claims 1 to 12, when loaded and run on computer means of the network element (105).

14. A network element (105) for a communication network for allowing a first communication device (1 03a) to share content with at least a second communication device (103b), the network module (105) comprising:
• means for receiving first type of classification information related to a content emanating from the first communication device (1 03a), the first type of classification information classifying the content;
• means for determining where the classified content emanating from the first communication device (1 03a) is located;
• means for determining whether the classification of the content corresponds to a second type of classification linked with a second communication device (103b); and
• means for, in the case where the classification of the content corresponds to the second type of classification, making the content available to the second communication device (1 03b).

15. A communication device (1 03a) arranged to share content with at least one other communication device (1 03b) in a communication network (101), the communication device (103a) comprising:
• means for obtaining content to be shared;
• means for classifying the content;
• means for classifying the communication device or at least one contact in its address book;
• means for informing a network module (105) about the content classification; and
• means for transferring the content to the communication network (101).
